# EUROPEAN PATENT SPECIFICATION

(11) **EP 3 748 605 B1**
(45) Date of publication and mention of the grant of the patent: **02.04.2025**
(21) Application number: 19743462.4
(22) Date of filing: 07.01.2019
(51) Int. Cl.: G08G 1/16, B60W 30/00, B60W 40/04, G06T 7/00, G08G 1/09, B60W 60/00, B60W 30/095, B60W 30/09, B60W 30/18

(54) **IMAGE PROCESSING DEVICE, IMAGING DEVICE, MOVING BODY, AND IMAGE PROCESSING METHOD**
BILDVERARBEITUNGSVORRICHTUNG, BILDGEBUNGSVORRICHTUNG, BEWEGLICHER KÖRPER UND BILDVERARBEITUNGSVERFAHREN
DISPOSITIF DE TRAITEMENT D'IMAGE, DISPOSITIF D'IMAGERIE, CORPS MOBILE ET PROCÉDÉ DE TRAITEMENT D'IMAGE

(30) Priority: 29.01.2018 JP 2018012872; 29.01.2018 JP 2018012877; 29.01.2018 JP 2018012902
(43) Date of publication of application: 09.12.2020
(73) Proprietor: Kyocera Corporation, Fushimi-ku, Kyoto-shi, Kyoto 612-8501 (JP)
(72) Inventor: MOTEKI Ryosuke, Kyoto-shi Kyoto 612-8501 (JP); OHWADA Yoshitake, Kyoto-shi Kyoto 612-8501 (JP); IDA Yousuke, Kyoto-shi Kyoto 612-8501 (JP); MITSUGI Tomohiro, Kyoto-shi Kyoto 612-8501 (JP); AOYAMA Takahiro, Kyoto-shi Kyoto 612-8501 (JP); IWANO Shota, Kyoto-shi Kyoto 612-8501 (JP); SAITO Nobuhiko, Kyoto-shi Kyoto 612-8501 (JP); KIJIMA Daisuke, Kyoto-shi Kyoto 612-8501 (JP)
(74) Representative: Viering, Jentschura & Partner mbB Patent- und Rechtsanwälte
(86) International application number: PCT/JP2019/000076
(87) International publication number: WO 2019/146385

(56) References cited:
- WO-A1-2006/070865
- WO-A1-2017/134876
- DE-A1- 102014 111 023
- JP-A- 2005 332 297
- JP-A- 2010 003 163
- JP-A- 2010 072 836
- JP-A- 2016 031 660
- JP-A- S57 174 800
- JP-U- 3 132 300
- JP-U- S57 106 099
- US-A1- 2015 336 502
- US-A1- 2017 240 098

## Description

### TECHNICAL FIELD

The present invention relates to an image processing apparatus, an imaging apparatus, a moveable body, and an image processing method.

### BACKGROUND

Techniques for detecting an object from an image captured by a camera are known.

For example, patent literature (PTL) 1 discloses a technique for capturing the area around a vehicle with an on-vehicle camera and detecting the movement speed of the knee position and the movement speed of the upper body position of a pedestrian from images captured by the on-vehicle camera. PTL 2 discloses a technique for detecting the state of an oncoming vehicle using an on-vehicle camera, radar, or the like when a vehicle is turning right at an intersection, judging the possibility of a collision with the oncoming vehicle based on the detection result, and notifying the driver. PTL 3 discloses a device according to the preamble of claim 1 and a method according to the preamble of claim 10.

### CITATION LIST

### Patent Literature

PTL 1: JP2010-066810A
PTL 2: JP2008-243065A
PTL 3 DE 10 2014 111023 A1

### SUMMARY

The present invention provides an image processing apparatus according to claim 1, an imaging apparatus according to claim 8, a moveable body according to claim 9, and an imaging processing method according to claim 10.

Further embodiments are disclosed in the dependent claims.

### BRIEF DESCRIPTION OF THE DRAWINGS

In the accompanying drawings:
FIG. 1 illustrates an example configuration of an image processing apparatus according to a first embodiment of the present invention;
FIG. 2 illustrates an example of the occurrence of a standstill between a moveable body and a pedestrian;
FIG. 3 is a flowchart illustrating an example of operations of the image processing apparatus illustrated in FIG. 1;
FIG. 4 illustrates an example configuration of an image processing apparatus according to a second embodiment of the present invention;
FIG. 5 illustrates an example of the occurrence of a standstill between a moveable body and another moveable body;
FIG. 6 is a flowchart illustrating an example of operations of the image processing apparatus illustrated in FIG. 4;
FIG. 7 illustrates an example configuration of an image processing apparatus according to a third embodiment of the present invention; and
FIG. 8 is a flowchart illustrating an example of operations of the image processing apparatus illustrated in FIG. 7.

### DETAILED DESCRIPTION

In recent years, research and development have been carried out on fully automatic driving of vehicles. The techniques disclosed in the above-described PTL 1 and PTL 2 could be applied to fully automatic driving, for example, to detect the state of a pedestrian who starts to move after stopping or the state of a vehicle driven by another person and to use this information to control vehicles by fully automatic driving. Despite the use of these techniques, however, fully automatic driving is not necessarily achieved suitably. The convenience of transportation has room for improvement.

Embodiments of the present invention are described below through examples with reference to the drawings. Identical reference signs in the drawings indicate identical or similar constituent elements.

### First Embodiment

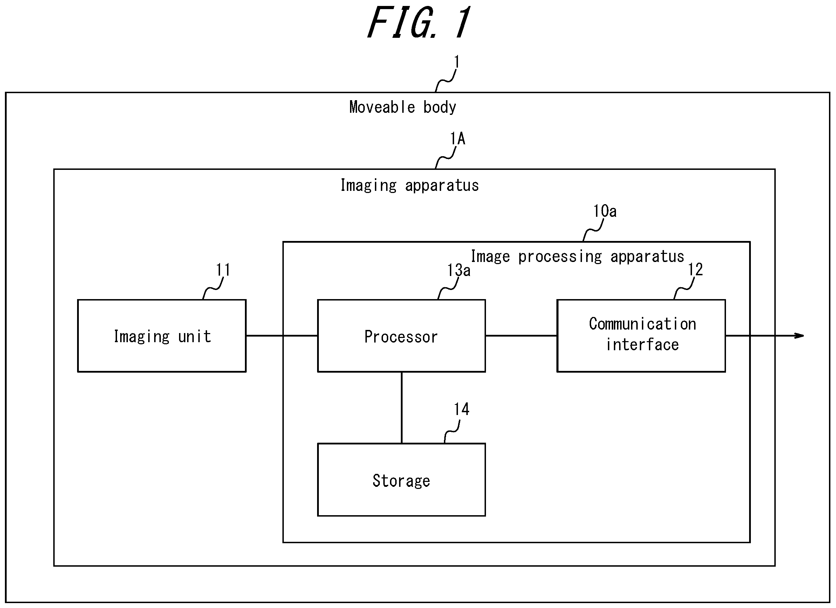

FIG. 1 illustrates an example of the main configuration of an image processing apparatus 10a according to a first embodiment of the present invention. As illustrated in FIG. 1, the image processing apparatus 10a is mounted in a moveable body 1, detects the state of an object from a surrounding image of the surroundings of the moveable body 1, and determines an action to be taken by the moveable body 1 in accordance with the detected state of the object. The object may, for example, be a person, another moveable body, an animal, or the like. Examples of people as objects include pedestrians and bicyclists. The moveable body 1 is, for example, a vehicle with an automatic driving function. "Automatic driving" as used herein includes automation of a portion or all of user operations for driving a vehicle. For example, automatic driving may include levels 1 through 5 as defined by the Society of Automotive Engineers (SAE). The moveable body 1 is described below as including a fully automatic driving function at level 4 or above as defined by the SAE. The vehicle that includes the fully automatic driving function is also referred to below as a fully automatic driving vehicle.

The image processing apparatus 10a illustrated in FIG. 1 includes a communication interface 12 as an output interface, a processor 13a, and a storage 14. An imaging unit 11 that acquires surrounding images by capturing images of the surroundings of the moveable body 1 is mounted in the moveable body 1 as an input interface. The image processing apparatus 10a and the imaging unit 11 form an imaging apparatus 1A mounted in the moveable body 1. First, the imaging unit 11 is described.

The imaging unit 11 is an on-vehicle camera mounted in the moveable body 1. The imaging unit 11 acquires a surrounding image by capturing an image of the surroundings of the moveable body 1 and outputs the surrounding image to the processor 13a. A plurality of imaging units 11 may be mounted in the moveable body 1. For example, when four on-vehicle cameras are mounted in the moveable body 1, one imaging unit 11 may be arranged at each of a position capable of imaging the surrounding area in front of the moveable body 1 and at least a portion of the front surface of the moveable body 1, a position capable of imaging the surrounding area behind the moveable body 1 and at least a portion of the back surface of the moveable body 1, a position capable of imaging the surrounding area on the left side of the moveable body 1 and at least a portion of the left surface of the moveable body 1, and a position capable of imaging the surrounding area on the right side of the moveable body 1 and at least a portion of the right surface of the moveable body 1. This arrangement enables imaging of the surrounding area in four directions from the moveable body 1.

The imaging unit 11 includes at least an imaging optical system and an image sensor.

For example, the imaging optical system includes one or more lenses, apertures, and the like. The lens included in the imaging optical system is a wide-angle lens such as a fisheye lens, for example. The imaging optical system forms an image of a subject on an optical detection surface of the image sensor. The image sensor includes a charge coupled device (CCD) image sensor, a complementary metal-oxide semiconductor (CMOS) image sensor, or the like, for example. A plurality of pixels are arrayed on the optical detection surface of the image sensor. The image sensor generates a captured image by capturing the image of the subject formed on the optical detection surface. The imaging unit 11 outputs the captured image generated by the image sensor to the processor 13a in a wired or wireless manner. The imaging unit 11 may output the captured image to external apparatuses, such as an electronic control unit (ECU), a display, and a navigation apparatus mounted in the moveable body 1. The imaging unit 11 may include a function to perform predetermined image processing on the captured image, such as white balance adjustment, exposure adjustment, or gamma correction.

Next, the components of the image processing apparatus 10a are described.

The communication interface 12 is an interface for communicating with various control systems of the moveable body 1 in a wired or wireless manner. For example, the communication interface 12 communicates with a control system that controls driving of the moveable body 1, a control system that turns the headlights and turn signals of the moveable body 1 on and off and honks the horn, and the like.

Examples of the processor 13a include a dedicated processor such as a digital signal processor (DSP) and a general-purpose processor such as a central processing unit (CPU). The processor 13a controls overall operations of the image processing apparatus 10a. For example, the processor 13a detects an image of an object from the surrounding image acquired by the imaging unit 11 and determines an action of the moveable body 1 based on the state of the detected object. When the object is a person, the processor 13a detects the state of the person based on at least one of the movement direction of the person, the direction of the face or gaze of the person, and movement of a hand or foot of the person.

The processor 13a also accesses various control systems of the moveable body 1 via the communication interface 12 to detect an action of the moveable body 1. As actions of the moveable body 1, the processor 13a detects move forward, move backward, stop, decelerate, change course, turn on lights, flash headlights, activate turn signal, honk horn, external display, maintain current state, and the like. For example, the processor 13a accesses the control system that controls driving of the moveable body 1 to detect actions such as move forward, move backward, stop, decelerate, and change course. The processor 13a accesses the control system that controls the headlights and turn signals, honking of the horn, and the like of the moveable body 1 to detect actions such as turn on lights, flash headlights, activate turn signal, honk horn, external display, and the like.

The processor 13a detects an image of an object from the surrounding image acquired by the imaging unit 11 and determines a first action of the moveable body 1 based on the state of the detected object. The processor 13a outputs information with an instruction to take the determined first action to the control system of the moveable body 1 via the communication interface 12. When the processor 13a does not obtain a meaningful reaction of the object to the first action based on the state of the object detected from the surrounding image acquired by the imaging unit 11 after the first action by the moveable body 1, the processor 13a determines a second action of the moveable body 1. Here, a meaningful reaction is a reaction for which the intention of the object is recognizable, such as a reaction for which the intention of the object is recognizable during automatic driving of the moveable body 1. Detailed examples of meaningful reactions are described below.

The storage 14 includes a primary memory device, a secondary memory device, and the like, for example. The storage 14 stores various information and programs necessary for operation of the image processing apparatus 10a.

Next, the operations of the image processing apparatus 10a are described.

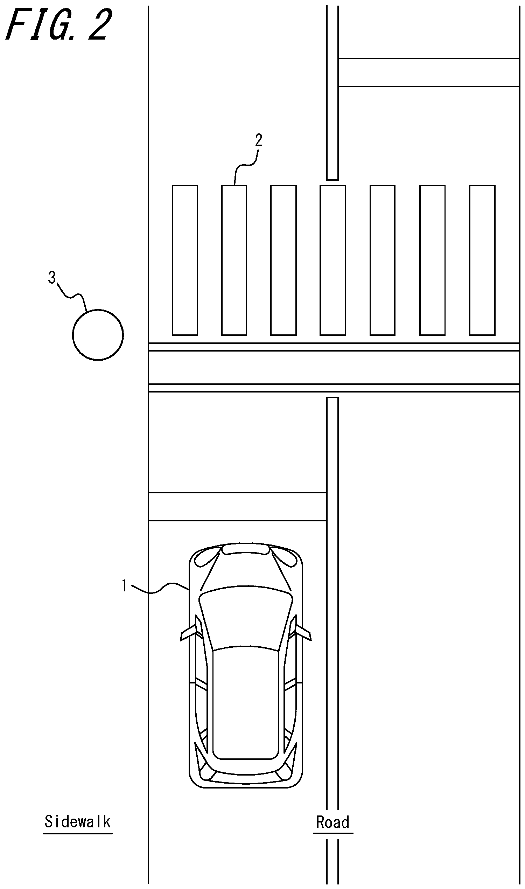

A standstill may occur between a fully automatic driving vehicle and an object. When the object is a person, examples of the conditions when a standstill may occur include a pedestrian 3 standing on the sidewalk near a crosswalk 2 while the moveable body 1 is traveling down the road, as illustrated in FIG. 2. When the moveable body 1 detects the pedestrian 3 standing near the crosswalk 2 from the surrounding image acquired by the imaging unit 11 under the conditions illustrated in FIG. 2, the moveable body 1 stops before the crosswalk 2, for example, so that the pedestrian 3 can cross the crosswalk 2. The pedestrian 3 does not necessarily cross the crosswalk 2, however, and may remain standing in place. In this case, the moveable body 1 remains stopped before the crosswalk 2, since the pedestrian 3 remains standing near the crosswalk 2 despite not having the intention of crossing the crosswalk 2. In this way, a standstill occurs between the moveable body 1 and the pedestrian 3, which may impede smooth transportation.

When a meaningful reaction is not obtained from an object under conditions in which the above-described standstill may occur, however, the image processing apparatus 10a of the present embodiment takes further action with respect to the object, obtains a reaction from the object, and detects the intention of the object. In other words, the intention of the object is detected in the present embodiment as though the moveable body 1 and the object were having a conversation. In this way, the probability of a standstill occurring is reduced, promoting smooth transportation. The convenience of transportation by the moveable body 1 can thus be improved.

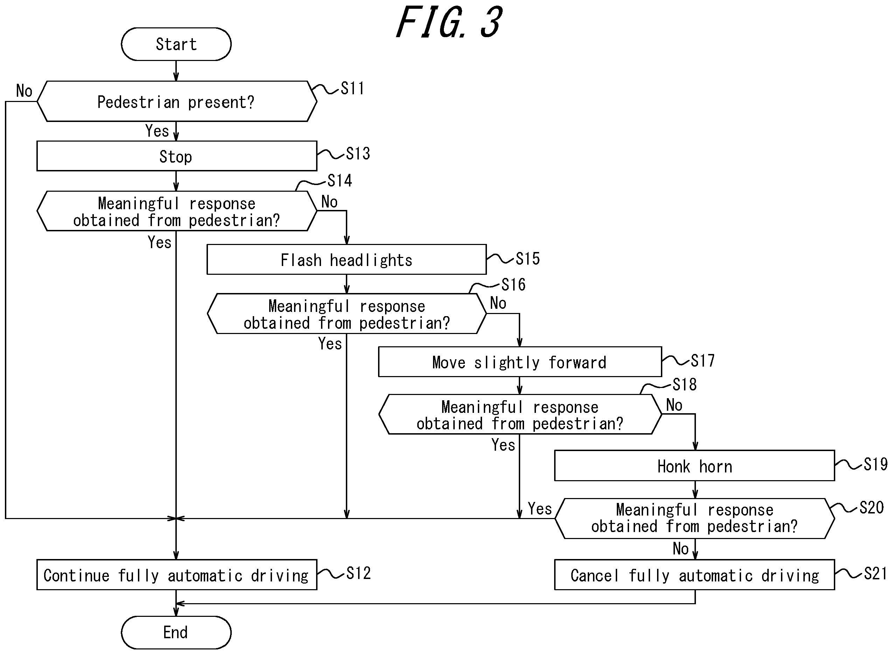

FIG. 3 is a flowchart illustrating an example of operations by the image processing apparatus 10a and illustrates an image processing method executed by the image processing apparatus 10a. In FIG. 3, an example in which the object is the pedestrian 3 standing near the crosswalk 2, as illustrated in FIG. 2, is described.

Step S11: the processor 13a judges whether a pedestrian 3 standing near the crosswalk 2 is present, as illustrated in FIG. 2, from the surrounding image acquired by the imaging unit 11. A condition in which the pedestrian 3 stands near the crosswalk 2 is an example of conditions in which a standstill can occur between the moveable body 1 and the pedestrian 3. The processor 13a judges whether the pedestrian 3 is present in various conditions in which a standstill can occur. Using various image recognition techniques, the processor 13a can detect the state of the pedestrian 3 from the surrounding image and detect the surrounding environment, such as being near the crosswalk 2.

Step S12: when it is judged that the pedestrian 3 is not present (step S11: No), the processor 13a continues fully automatic driving of the moveable body 1 and causes the moveable body 1 to pass through the crosswalk 2.

Step S13: when it is judged that the pedestrian 3 is present (step S11: Yes), the processor 13a determines that "stop" is the action of the moveable body 1. The processor 13a outputs information with an instruction to stop to the moveable body 1 via the communication interface 12, causing the moveable body 1 to stop. In other words, the processor 13a determines that "stop" is the action (first action) of the moveable body 1 based on the state of the standing pedestrian 3 detected from the surrounding image in the environment near the crosswalk 2 and outputs information with the instruction "stop" to the moveable body 1 via the communication interface 12.

Step S14: the processor 13a judges whether a meaningful reaction of the pedestrian 3 to the action (stopping) of the moveable body 1 has been obtained. For example, the processor 13a judges whether a meaningful reaction of the pedestrian 3 has been obtained from the surrounding image acquired by the imaging unit 11.

When it is judged that a meaningful reaction of the pedestrian 3 to the action (stopping) of the moveable body 1 has been obtained (step S14: Yes), the processor 13a proceeds to the processing of step S12 and continues fully automatic driving of the moveable body 1. Examples of meaningful reactions in the example of the crosswalk 2 illustrated in FIG. 2 include the pedestrian 3 starting to cross the crosswalk 2, the pedestrian 3 gesturing to indicate that he will not cross the crosswalk 2, and the pedestrian 3 gesturing to yield the right of way to the moveable body 1. The intention of the pedestrian 3 can be detected from these reactions, such as that the pedestrian 3 intends or does not intend to cross the crosswalk 2, or that the pedestrian 3 intends to yield the right of way to the moveable body 1. The moveable body 1 can continue fully automatic driving by detecting these intentions of the pedestrian 3.

Step S15: when it is judged that a meaningful reaction of the pedestrian 3 to the action (stopping) of the moveable body 1 cannot be obtained based on the state of the pedestrian 3 detected from the surrounding image acquired by the imaging unit 11 after the moveable body 1 stops (step S14: No), the processor 13a determines an action (second action) of the moveable body 1. When a meaningful reaction of the pedestrian 3 to the action (stopping) of the moveable body 1 cannot be obtained, it can be inferred that the pedestrian 3 has not noticed the action (stopping) of the moveable body 1 or does not intend to cross the crosswalk 2, for example. In this case, the processor 13a determines the second action of the moveable body 1 to make the pedestrian 3 notice the moveable body 1 or to detect the intention of the pedestrian 3. For example, the processor 13a determines that "flash headlights", i.e. temporarily switching the headlights of the moveable body 1 to high beams, is the action (second action) of the moveable body 1. The processor 13a outputs information with the instruction "flash headlights" to the moveable body 1 via the communication interface 12 to cause the moveable body 1 to flash the headlights.

In this way, when the processor 13a does not obtain a meaningful reaction of the pedestrian 3 to the first action based on the state of the pedestrian 3 detected from the surrounding image acquired by the imaging unit 11 after the first action (stopping) by the moveable body 1, the processor 13a determines the second action (flash headlights) of the moveable body 1. This enables the moveable body 1 to encourage the pedestrian 3 to react, enabling the image processing apparatus 10a to detect the intention of the pedestrian 3 more accurately. The probability of a standstill occurring between the moveable body 1 and the pedestrian 3 is thereby reduced, promoting smooth transportation. The convenience of transportation by the moveable body 1 can thus be improved.

Step S16: the processor 13a judges whether a meaningful reaction of the pedestrian 3 to the action (flash headlights) of the moveable body 1 has been obtained.

When it is judged that a meaningful reaction of the pedestrian 3 to the action (flash headlights) of the moveable body 1 has been obtained (step S16: Yes), the processor 13a proceeds to the processing of step S12 and continues fully automatic driving of the moveable body 1.

Step S17: when it is judged that a meaningful reaction of the pedestrian 3 to the action (flash headlights) of the moveable body 1 cannot be obtained based on the state of the pedestrian 3 detected from the surrounding image acquired by the imaging unit 11 after the headlights are flashed (step S16: No), the processor 13a determines that "move slightly forward", an action to cause the moveable body 1 to move forward without reaching the crosswalk 2 (for example, approximately several tens of centimeters), is the action of the moveable body 1. The processor 13a then outputs information with the instruction "move slightly forward" to the moveable body 1 via the communication interface 12 to cause the moveable body 1 to move slightly forward. In other words, when the processor 13a determines that "flash headlights" is the first action and does not obtain a meaningful reaction of the pedestrian 3 to the first action based on the state of the pedestrian 3 detected from the surrounding image after the moveable body 1 flashes the headlights, then in step S17, the processor 13a determines that "move slightly forward" is the second action of the moveable body 1.

Step S18: the processor 13a judges whether a meaningful reaction of the pedestrian 3 to the action (move slightly forward) of the moveable body 1 has been obtained.

When it is judged that a meaningful reaction of the pedestrian 3 to the action (move slightly forward) of the moveable body 1 has been obtained (step S18: Yes), the processor 13a proceeds to the processing of step S12 and continues fully automatic driving of the moveable body 1.

Step S19: when it is judged that a meaningful reaction of the pedestrian 3 to the action (move slightly forward) of the moveable body 1 cannot be obtained based on the state of the pedestrian 3 detected from the surrounding image acquired by the imaging unit 11 after the moveable body 1 moves slightly forward (step S18: No), the processor 13a determines that "honk horn" is the action of the moveable body 1. The processor 13a outputs information with the instruction "honk horn" to the moveable body 1 via the communication interface 12 to cause the moveable body 1 to honk the horn. In other words, when the processor 13a determines that "move slightly forward" is the first action and does not obtain a meaningful reaction of the pedestrian 3 to the first action based on the state of the pedestrian 3 detected from the surrounding image after the moveable body 1 moves slightly forward, then in step S19, the processor 13a determines that "honk horn" is the second action of the moveable body 1.

Step S20: the processor 13a judges whether a meaningful reaction of the pedestrian 3 to the action (honk horn) of the moveable body 1 has been obtained.

When it is judged that a meaningful reaction of the pedestrian 3 to the action (honk horn) of the moveable body 1 has been obtained (step S20: Yes), the processor 13a proceeds to the processing of step S12 and continues fully automatic driving of the moveable body 1.

Step S21: when it is judged that a meaningful reaction of the pedestrian 3 to the action (honk horn) of the moveable body 1 cannot be obtained based on the state of the pedestrian 3 detected from the surrounding image acquired by the imaging unit 11 after the moveable body 1 honks the horn (step S20: No), the processor 13a cancels fully automatic driving of the moveable body 1. In other words, the processor 13a cancels fully automatic driving of the moveable body 1 when a meaningful reaction cannot be obtained from the pedestrian 3 despite repetition of an action by the moveable body 1 a predetermined number of times. Cancelation of the fully automatic driving enables the driver of the moveable body 1 to recognize the intention of the pedestrian 3 from the appearance, gestures, and the like of the pedestrian 3 and to drive the moveable body 1 in accordance with such recognition.

The examples of the actions by the moveable body 1 in FIG. 3 are "stop", "flash headlights", "move slightly forward", and "honk horn", but these examples are not limiting. Operations such as "move forward", "move backward", "stop", "decelerate", "change course", "turn on lights", "flash headlights", "activate turn signal", "honk horn", "external display", and "maintain current state" can be appropriately selected as actions of the moveable body 1. Furthermore, the action of the moveable body 1 may be an appropriate combination of operations such as "move forward", "move backward", "stop", "decelerate", "change course", "turn on lights", "flash headlights", "activate turn signal", "honk horn", "external display", and "maintain current state". When the moveable body 1 includes an audio output function, the actions of the moveable body 1 may include audio output. When the moveable body 1 includes a function for projection on the ground or the like, the actions of the moveable body 1 may include projection of a predetermined image, such as a message, on the sidewalk or the like.

The processor 13a has been described as determining the actions by the moveable body 1 in the order of "stop", "flash headlights", "move slightly forward", and "honk horn" in FIG. 3, but this example is not limiting. The processor 13a may determine the action of the moveable body 1 in a predetermined order of priority from among a plurality of operations such as "move forward", "move backward", "stop", "decelerate", "change course", "turn on lights", "flash headlights", "activate turn signal", "honk horn", "external display", and "maintain current state". The processor 13a may, for example, determine the action of the moveable body 1 in accordance with a predetermined order of priority based on the surrounding environment or the like. For example, the processor 13a may reduce the priority of actions that could be noisy, such as "honk horn", and increase the priority of actions that do not produce noise, such as "turn on lights", "flash headlights", and "activate turn signal", at night. The processor 13a may also assign points to each operation in accordance with a factor such as the probability of the pedestrian 3 noticing the operation. In this case, when a meaningful reaction is not obtained despite presentation of an action formed by a single operation to the pedestrian 3 one or more times, for example, the processor 13a may determine that the action of the moveable body 1 is a combination of a plurality of operations with a higher total number of points than the points assigned to the single operation.

In the example in FIG. 3, the fully automatic driving of the moveable body 1 is cancelled when a meaningful reaction cannot be obtained from the pedestrian 3 despite repetition of an action by the moveable body 1 a predetermined number of times, but this example is not limiting. Instead of canceling fully automatic driving, the processor 13a may, for example, drive the moveable body 1 slowly while maintaining a certain distance from the pedestrian 3.

In the example in FIG. 1, the detection of the state of the object from the surrounding image, the determination of the action of the moveable body 1 in accordance with the state of the object, and the like are performed by the image processing apparatus 10a mounted in the moveable body 1, but this example is not limiting. For example, a server or the like on a network may include the functions mainly provided in the processor 13a, such as detection of the state of the object from the surrounding image and the determination of the action of the moveable body 1 in accordance with the state of the object. In this case, the moveable body 1 is capable of communicating with the server over the network and transmits the surrounding image from the moveable body 1 to the server. The server detects the object from the surrounding image acquired from the moveable body 1, determines the action of the moveable body 1 in accordance with the state of the object, and transmits information with an instruction to perform the determined action to the moveable body 1.

The image processing apparatus 10a in the present embodiment thus includes the communication interface 12 and the processor 13a. The processor 13a detects an image of an object from a surrounding image capturing the surroundings of the moveable body 1 and determines an action of the moveable body 1 based on the state of the detected object. The communication interface 12 outputs, to the moveable body 1, information with an instruction to perform the action of the moveable body 1 determined by the processor 13a. The processor 13a determines a first action of the moveable body 1 based on the state of the object detected from the surrounding image and outputs information with an instruction to perform the determined first action to the moveable body 1 via the communication interface 12. The processor 13a determines a second action of the moveable body 1 based on the state of the object detected from the surrounding image after the first action by the moveable body 1.

By the moveable body 1 being caused to perform the second action after the first action by the moveable body 1, the object can be encouraged to react, and the intention of the object can be detected more accurately. The probability of a standstill occurring between the moveable body 1 and the object is thereby reduced, promoting smooth transportation. The convenience of transportation by the moveable body 1 can thus be improved.

### Second Embodiment

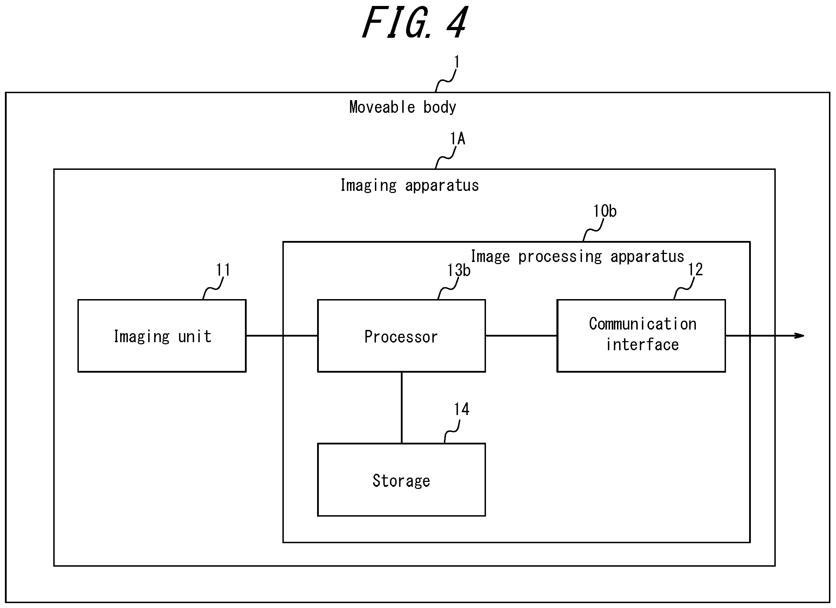

FIG. 4 illustrates an example of the main configuration of an image processing apparatus 10b according to a second embodiment of the present invention. As illustrated in FIG. 4, the image processing apparatus 10b according to the present embodiment is mounted in a moveable body 1, detects the state of another moveable body from a surrounding image of the surroundings of the moveable body 1, and determines an action to be taken by the moveable body 1 in accordance with the detected state of the other moveable body. The moveable body 1 is, for example, a vehicle with an automatic driving function. The other moveable body is, for example, a vehicle driven by a person.

The image processing apparatus 10b illustrated in FIG. 4 includes a communication interface 12 as an output interface, a processor 13b, and a storage 14. In other words, the image processing apparatus 10b according to the present embodiment differs from the image processing apparatus 10a according to the first embodiment in that the processor 13a is changed to the processor 13b. An imaging unit 11 that acquires surrounding images by capturing images of the surroundings of the moveable body 1 is mounted in the moveable body 1 as an input interface. The image processing apparatus 10b and the imaging unit 11 form an imaging apparatus 1A mounted in the moveable body 1.

Examples of the processor 13b include a dedicated processor such as a DSP and a general-purpose processor such as a CPU. The processor 13b controls overall operations of the image processing apparatus 10b. For example, the processor 13b performs action determination processing to detect an image of another moveable body from the surrounding image acquired by the imaging unit 11 and determine an action of the moveable body 1 based on the state of the detected other moveable body. As the state of the other moveable body, the processor 13b detects at least one of move forward, move backward, stop, decelerate, steering direction, change course, turn on lights, flash headlights, activate turn signal, honk horn, external display, and maintain current state by the other moveable body.

The processor 13b accesses various control systems of the moveable body 1 via the communication interface 12 to detect an action of the moveable body 1. As actions of the moveable body 1, the processor 13b detects move forward, move backward, stop, decelerate, change course, turn on lights, flash headlights, activate turn signal, honk horn, external display, maintain current state, and the like. For example, the processor 13b accesses the control system that controls driving of the moveable body 1 to detect actions such as move forward, move backward, stop, decelerate, and change course. The processor 13b accesses the control system that controls the headlights and turn signals, honking of the horn, and the like of the moveable body 1 to detect actions such as turn on lights, flash headlights, activate turn signal, honk horn, external display, and the like.

The processor 13b performs the following operations as action determination processing. Specifically, the processor 13b detects an image of another moveable body from the surrounding image acquired by the imaging unit 11 and determines a first action of the moveable body 1 based on a first state of the detected other moveable body. The processor 13b outputs information with an instruction to take the determined first action to the control system of the moveable body 1 via the communication interface 12. When the processor 13b does not obtain a meaningful reaction of the other moveable body to the first action based on a second state of the other moveable body detected from the surrounding image acquired by the imaging unit 11 after the first action by the moveable body 1, the processor 13b determines a second action of the moveable body 1. Here, a meaningful reaction is a reaction for which the intention of the driver of the other moveable body is recognizable, such as a reaction for which the intention of the driver of the other moveable body is recognizable during automatic driving of the moveable body 1. Detailed examples of meaningful reactions are described below.

Next, the operations of the image processing apparatus 10b are described.

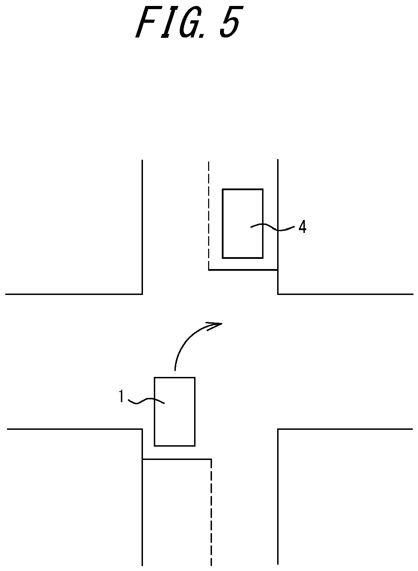

A standstill may occur between a fully automatic driving vehicle and a vehicle driven by a person. Examples of the conditions when a standstill may occur include another moveable body 4, which travels in the oncoming lane, being stopped before an intersection when the moveable body 1 is about to turn right at an intersection, as illustrated in FIG. 5. When the moveable body 1 detects the other moveable body 4 in the oncoming lane from the surrounding image acquired by the imaging unit 11 under the conditions illustrated in FIG. 5, the moveable body 1 stops after slightly entering the intersection from the driving lane, for example, so that the other moveable body 4 can go straight or turn left. The other moveable body 4 does not necessarily enter the intersection and go straight or turn left, however, and may stop to yield the right of way to the moveable body 1, to unload items, or the like. In this case, the moveable body 1 might remain stopped due to the other moveable body 4 continuing to be present before the intersection, despite the driver of the other moveable body 4 not having the intention of entering the intersection. In this way, a standstill occurs between the moveable body 1 and the other moveable body 4, which may impede smooth transportation.

When a meaningful reaction is not obtained from the other moveable body 4 under conditions in which the above-described standstill may occur, however, the image processing apparatus 10b of the present embodiment takes further action with respect to the other moveable body 4. The image processing apparatus 10b can thereby obtain a reaction of the other moveable body 4 and more accurately detect the intention of the driver of the other moveable body 4. In other words, the intention of the driver of the other moveable body 4 is detected in the present embodiment as though the moveable body 1 and the other moveable body 4 were having a conversation. In this way, the probability of a standstill occurring is reduced, promoting smooth transportation. The convenience of transportation by the moveable body 1 can thus be improved.

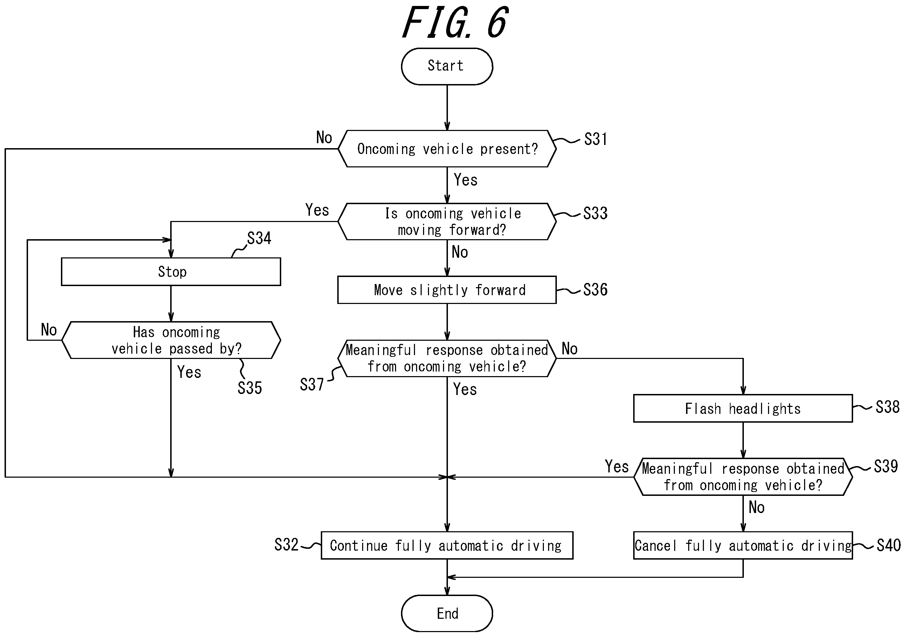

FIG. 6 is a flowchart illustrating an example of operations by the image processing apparatus 10b and illustrates an image processing method executed by the image processing apparatus 10b. In FIG. 6, an example in which the moveable body 1 is turning right at an intersection, as illustrated in FIG. 5, is described.

Step S31: the processor 13b judges, from the surrounding image acquired by the imaging unit 11, whether an oncoming vehicle that is another moveable body 4 is present in the oncoming lane.

Step S32: when it is judged that an oncoming vehicle is not present (step S31: No), the processor 13b continues fully automatic driving of the moveable body 1 and causes the moveable body 1 to turn right at the intersection.

Step S33: when it is judged that an oncoming vehicle is present (step S31: Yes), the processor 13b judges whether the oncoming vehicle is moving forward from the surrounding images acquired by the imaging unit 11.

Step S34: when it is judged that the oncoming vehicle is moving forward (step S33: Yes), the processor 13b causes the moveable body 1 to stop and wait to turn right at a right-turn position that is near the center of the intersection and that allows the oncoming vehicle to go straight.

Step S35: next, the processor 13b judges whether the oncoming vehicle has passed through the intersection by going straight through or turning left at the intersection.

When it is judged that the oncoming vehicle has not passed through the intersection (step S35: No), the processor 13b returns to the processing in step S34 and causes the moveable body 1 to remain stopped.

When it is judged that the oncoming vehicle has passed through the intersection (step S35: Yes), the processor 13b continues fully automatic driving of the moveable body 1 and causes the moveable body 1 to turn right at the intersection.

Step S36: when is judged that the oncoming vehicle is not moving forward (step S33: No), the processor 13b determines that "move slightly forward", an action to cause the moveable body 1 to move forward slightly (for example, approximately several tens of centimeters) from the right-turn position without blocking straight travel of the oncoming vehicle, is the action of the moveable body 1. In other words, the processor 13b determines that "move slightly forward" is the action (first action) of the moveable body 1 based on the state (first state) of the oncoming vehicle that is stopped in the environment of turning right at an intersection and outputs information with the instruction "move slightly forward" to the moveable body 1 via the communication interface 12.

As described above, the conditions such that an oncoming vehicle that is another moveable body 4 is stopped when the moveable body 1 is turning right at an intersection are an example of conditions in which a standstill can occur between the moveable body 1 and the other moveable body 4. The processor 13b judges whether the other moveable body 4 is present in various conditions in which a standstill can occur. Using various image recognition techniques, the processor 13b can detect the state of the other moveable body 4 from the surrounding image and detect the surrounding environment, such as turning right at an intersection.

Step S37: the processor 13b judges whether a meaningful reaction of the oncoming vehicle to the action (move slightly forward) of the moveable body 1 has been obtained. For example, the processor 13b judges whether a meaningful reaction of the oncoming vehicle has been obtained from the surrounding image acquired by the imaging unit 11.

When it is judged that a meaningful reaction of the oncoming vehicle to the action (move slightly forward) of the moveable body 1 has been obtained (step S37: Yes), the processor 13b proceeds to the processing of step S32 and continues fully automatic driving of the moveable body 1. Examples of meaningful reactions in the example of turning right at an intersection as illustrated in FIG. 5 include the oncoming vehicle starting to move forward and the oncoming vehicle yielding the right of way to the moveable body 1 by an operation such as flashing the headlights. The intention of the driver of the oncoming vehicle can be detected from these reactions, such as that the driver intends to enter the intersection or intends to yield the right of way to the moveable body 1. By detecting the intention of the driver of the oncoming vehicle, the moveable body 1 can continue fully automatic driving in accordance with the intention.

Step S38: when it is judged that a meaningful reaction of the oncoming vehicle to the action of the moveable body 1 cannot be obtained based on the state of the oncoming vehicle detected from the surrounding image acquired by the imaging unit 11 after the first action (move slightly forward) by the moveable body 1 (step S37: No), the processor 13b determines the action (second action) of the moveable body 1. When a meaningful reaction of the oncoming vehicle to the action (move slightly forward) of the moveable body 1 cannot be obtained, it can be inferred that the driver of the oncoming vehicle has not noticed the action of the moveable body 1 or does not intend to enter the intersection, for example. In this case, the processor 13b determines the second action of the moveable body 1 to make the driver of the oncoming vehicle notice the moveable body 1 or to encourage a reaction from the oncoming vehicle in order to detect the intention of the driver of the oncoming vehicle more accurately. For example, the processor 13b determines that "flash headlights", i.e. temporarily switching the headlights of the moveable body 1 to high beams, is the second action of the moveable body 1. The processor 13b outputs information with the instruction "flash headlights" to the moveable body 1 via the communication interface 12 to cause the moveable body 1 to flash the headlights.

In this way, when the processor 13b does not obtain a meaningful reaction of the other moveable body 4 to the first action based on the state of the other moveable body 4 detected from the surrounding image acquired by the imaging unit 11 after the first action (move slightly forward) by the moveable body 1, the processor 13b determines the second action (flash headlights) of the moveable body 1. This enables the moveable body 1 to encourage the other moveable body 4 to react, enabling the image processing apparatus 10b to detect the intention of the driver of the other moveable body 4 more accurately. The probability of a standstill occurring between the moveable body 1 and the other moveable body 4 is thereby reduced, promoting smooth transportation. The convenience of transportation can thus be improved.

Step S39: the processor 13b judges whether a meaningful reaction of the oncoming vehicle to the action (flash headlights) of the moveable body 1 has been obtained.

When it is judged that a meaningful reaction of the oncoming vehicle to the action (flash headlights) of the moveable body 1 has been obtained (step S39: Yes), the processor 13b proceeds to the processing of step S32 and continues fully automatic driving of the moveable body 1.

Step S40: when it is judged that a meaningful reaction of the oncoming vehicle to the action (flash headlights) of the moveable body 1 cannot be obtained (step S39: No), the processor 13b cancels fully automatic driving of the moveable body 1. Cancelation of the fully automatic driving enables the driver of the moveable body 1 to recognize the intention of the driver of the oncoming vehicle from the appearance and the like of the oncoming vehicle and to drive the moveable body 1 in accordance with such recognition.

In the example in FIG. 6, the fully automatic driving of the moveable body 1 is cancelled when a meaningful reaction of the oncoming vehicle cannot be obtained after flashing the headlights as the second action, but this example is not limiting. After flashing the headlights, the processor 13b may perform operations such as honking the horn and activating a turn signal in sequence and may judge whether a meaningful reaction of the oncoming vehicle is obtained after each operation. The processor 13b may also cancel fully automatic driving of the moveable body 1 when a meaningful reaction cannot be obtained from the other moveable body 4 despite repetition of an action by the moveable body 1 a predetermined number of times.

The examples of the actions by the moveable body 1 in FIG. 6 are "move slightly forward" and "flash headlights", but these examples are not limiting. Operations such as "move forward", "move backward", "stop", "decelerate", "change course", "turn on lights", "flash headlights", "activate turn signal", "honk horn", "external display", and "maintain current state" can be appropriately selected as actions of the moveable body 1. Furthermore, the action of the moveable body 1 may be an appropriate combination of operations such as "move forward", "move backward", "stop", "decelerate", "change course", "turn on lights", "flash headlights", "activate turn signal", "honk horn", "external display", and "maintain current state". When the moveable body 1 includes an audio output function, the actions of the moveable body 1 may include audio output. When the moveable body 1 includes a function for projection on the ground or the like, the actions of the moveable body 1 may include projection of a predetermined image, such as a message, on the sidewalk or the like.

The processor 13b has been described as determining the actions by the moveable body 1 in the order of "move slightly forward" and "flash headlights" in FIG. 6, but this example is not limiting. The processor 13b may determine the action of the moveable body 1 in a predetermined order of priority from among a plurality of operations such as "move forward", "move backward", "stop", "decelerate", "change course", "turn on lights", "flash headlights", "activate turn signal", "honk horn", "external display", and "maintain current state". The processor 13b may, for example, determine the action of the moveable body 1 in accordance with a predetermined order of priority based on the surrounding environment or the like. For example, the processor 13b may reduce the priority of actions that could be noisy, such as "honk horn", and increase the priority of actions that do not produce noise, such as "turn on lights", "flash headlights", and "activate turn signal", at night. The processor 13b may also assign points to each operation in accordance with a predetermined standard, such as the probability of the driver of the other moveable body 4 noticing the operation. In this case, when a meaningful reaction of the other moveable body 4 cannot be obtained despite presentation of an action formed by a single operation one or more times, for example, the processor 13b may determine that the action of the moveable body 1 is a combination of a plurality of operations with a higher total number of points than the points assigned to the single operation.

In the example in FIG. 6, the fully automatic driving of the moveable body 1 is cancelled when a meaningful reaction cannot be obtained from the other moveable body 4 despite repetition of an action by the moveable body 1 a predetermined number of times, but this example is not limiting. Instead of canceling fully automatic driving, the processor 13b may, for example, drive the moveable body 1 slowly while maintaining a certain distance from the other moveable body 4.

In the example in FIG. 4, the detection of the state of the other moveable body 4 from the surrounding image, the determination of the action of the moveable body 1 in accordance with the state of the other moveable body 4, and the like are performed by the image processing apparatus 10b mounted in the moveable body 1, but this example is not limiting. For example, a server or the like on a network may include the functions mainly provided in the processor 13b, such as detection of the state of the other moveable body 4 from the surrounding image and the determination of the action of the moveable body 1 in accordance with the state of the other moveable body 4. In this case, the moveable body 1 is capable of communicating with the server over the network and transmits the surrounding image from the moveable body 1 to the server. The server detects the other moveable body 4 from the surrounding image acquired from the moveable body 1, determines the action of the moveable body 1 in accordance with the state of the other moveable body 4, and transmits information with an instruction to perform the determined action to the moveable body 1.

Next, an example of operations of the processor 13b are described in greater detail.

The processor 13b predicts the path of the moveable body 1. For example, the processor 13b predicts the path of the moveable body 1 based on captured images of the imaging unit 11 and the result of monitoring of a control system that controls driving of the moveable body 1 via the communication interface 12. The processor 13b predicts the path of the other moveable body 4 based on the state (first state) of the other moveable body 4. When the processor 13b predicts a collision between the moveable body 1 and the other moveable body 4 while the state (second state) of the other moveable body 4 is move forward or maintain current state, for example, the processor 13b determines that stop or decelerate is the action (second action) of the moveable body 1 until the prediction of the collision resolved. When the processor 13b predicts a collision between the moveable body 1 and the other moveable body 4 while the state (second state) of the other moveable body 4 is any of stop, decelerate, or change course, for example, the processor 13b determines that move forward or flash headlights is the action (second action) of the moveable body 1. A collision between the moveable body 1 and the other moveable body 4 can thus be avoided. Examples of operations of the processor 13b in various cases during driving of the moveable body 1 are described below.

First, an example of operations of the processor 13b when the moveable body 1 is turning right at an intersection are described with reference to Table 1.

**[Table 1]**

| State of other moveable body | Action of moveable body | State of other moveable body | Action of moveable body |
|---|---|---|---|
| Oncoming vehicle is moving forward | Stop | Oncoming vehicle is moving forward | Wait |
| | | Oncoming vehicle is stopped | Move slightly forward |
| | | | Flash headlights |
| | | | Honk horn |
| | | | Activate turn signal |
| Oncoming vehicle is stopped | Move slightly forward | Meaningful reaction from oncoming vehicle | Action corresponding to reaction from oncoming vehicle |
| | Flash headlights | | |
| | Honk horn | No meaningful reaction from oncoming vehicle | Action to encourage reaction from oncoming vehicle |
| | Activate turn signal | | |

The processor 13b detects the state of an oncoming vehicle, as the other moveable body 4, driving in the oncoming lane relative to the driving lane of the moveable body 1 when the moveable body 1 is turning right. The processor 13b determines that "stop" is the action of the moveable body 1 when the oncoming vehicle is moving forward. The processor 13b then detects the state of the oncoming vehicle again. When the oncoming vehicle is moving forward, the processor 13b causes the moveable body 1 to wait. In other words, the processor 13b causes the moveable body 1 to remain stopped. When the oncoming vehicle has stopped, the processor 13b determines that "move slightly forward", "flash headlights", "honk horn", "activate turn signal", or the like is the action of the moveable body 1.

When the oncoming vehicle is stopped, the processor 13b determines that "move slightly forward", "flash headlights", "honk horn", "activate turn signal", or the like is the action of the moveable body 1. The processor 13b then detects the state of the oncoming vehicle again and judges whether a meaningful reaction has been obtained from the oncoming vehicle. When it is judged that a meaningful reaction has been obtained from the oncoming vehicle, the processor 13b determines that an action corresponding to the reaction of the oncoming vehicle is the action of the moveable body 1. For example, when it is judged that the driver of the oncoming vehicle intends to enter the intersection, the processor 13b causes the moveable body 1 to stop until the oncoming vehicle passes by. When it is judged that the driver of the oncoming vehicle intends to yield the right of way to the moveable body 1, for example, the processor 13b causes the moveable body 1 to turn right at the intersection.

When it is judged that no meaningful reaction has been obtained from the oncoming vehicle, the processor 13b determines that "move slightly forward", "flash headlights", "honk horn", "activate turn signal", or the like is the action of the moveable body 1 to encourage a reaction, from the oncoming vehicle, that would allow the intention of the driver of the oncoming vehicle to be detected. The processor 13b then detects the state of the oncoming vehicle again. In this way, the processor 13b detects the state of the other moveable body 4 traveling in the oncoming lane when the moveable body 1 is turning right at an intersection. The processor 13b then performs action determination processing when the detected state of the oncoming vehicle is that the oncoming vehicle is stopped.

When the oncoming vehicle is stopped during a right turn by the moveable body 1, the intention of the driver of the oncoming vehicle is not necessarily clear, and a standstill may occur between the moveable body 1 and the oncoming vehicle. Accordingly, the action determination processing determines the action of the moveable body 1 to be an action encouraging a reaction from the oncoming vehicle in order to detect the intention of the driver of the oncoming vehicle more accurately. This approach can reduce the probability of a standstill.

Next, an example of operations when the moveable body 1 merges from the driving lane onto the main line of a highway or the like, i.e. when the moveable body 1 merges from a first lane to a second lane, is described with reference to Table 2.

**[Table 2]**

| State of other moveable body | Action of moveable body | State of other moveable body | Action of moveable body |
|---|---|---|---|
| No main lane traveling vehicle | Activate turn signal | | |
| | Start changing lanes | | |
| Main lane traveling vehicle is decelerating | Activate turn signal | | |
| | Move gradually towards main lane | | |
| | Accelerate | | |
| Main lane traveling vehicle is accelerating | Activate turn signal | | |
| | Move gradually towards main lane | | |
| | Decelerate | | |
| Main lane traveling vehicle is traveling at constant speed | Activate turn signal | Meaningful reaction from main lane traveling vehicle | Action corresponding to reaction from main lane traveling vehicle |
| | | No meaningful reaction from main lane traveling vehicle | Action to obtain reaction from main lane traveling vehicle |
| | Move gradually towards main lane | Meaningful reaction from main lane traveling vehicle | Action corresponding to reaction from main lane traveling vehicle |
| | | No meaningful reaction from main lane traveling vehicle | Action to obtain reaction from main lane traveling vehicle |
| | Accelerate | Meaningful reaction from main lane traveling vehicle | Action corresponding to reaction from main lane traveling vehicle |
| | | No meaningful reaction from main lane traveling vehicle | Action to obtain reaction from main lane traveling vehicle |
| | Decelerate | Meaningful reaction from main lane traveling vehicle | Action corresponding to reaction from main lane traveling vehicle |
| | | No meaningful reaction from main lane traveling vehicle | Action to obtain reaction from main lane traveling vehicle |

At the time of merging onto a main lane, such as a highway, the processor 13b detects the state of a vehicle traveling in the main lane behind the moveable body 1 as another moveable body 4. The vehicle traveling in the main lane behind the moveable body 1 is referred to below as a main lane traveling vehicle. When no main lane traveling vehicle is present, the processor 13b determines that "activate turn signal" and "start changing lanes" are the actions of the moveable body 1. In other words, the processor 13b starts to merge the moveable body 1 into the main lane when no main lane traveling vehicle is present.

When the main lane traveling vehicle is decelerating, it can be inferred that the driver of the main lane traveling vehicle intends to encourage merging of the moveable body 1 into the main lane. The processor 13b therefore determines that "activate turn signal", "move gradually towards main lane", and "accelerate" are the actions of the moveable body 1. The processor 13b then detects the state of the main lane traveling vehicle and starts to merge the moveable body 1 into the main lane if merging into the main lane is still possible.

When the main lane traveling vehicle is accelerating, it can be inferred that the driver of the main lane traveling vehicle is not encouraging the moveable body 1 to merge into the main lane and intends to continue traveling. The processor 13b therefore determines that "activate turn signal", "move gradually towards main lane", and "decelerate" are the actions of the moveable body 1. The processor 13b then detects the state of the main lane traveling vehicle. If the main lane traveling vehicle is still continuing to travel, for example, the processor 13b does not merge the moveable body 1 into the main lane immediately, but rather attempts merging into the main lane again after the main lane traveling vehicle passes by.

When the main lane traveling vehicle is traveling at constant speed, i.e. when the main lane traveling vehicle is traveling in a way that the speed does not change by a predetermined amount or more, then it is unclear whether the driver of the main lane traveling vehicle intends to encourage the moveable body 1 to merge into the main lane or intends to continue traveling and is not encouraging the moveable body 1 to merge into the main lane. The processor 13b therefore determines that "activate turn signal", "move gradually towards main lane", "accelerate", "decelerate", or the like is the action of the moveable body 1 to encourage a reaction, from the main lane traveling vehicle, that would allow the intention of the driver of the main lane traveling vehicle to be detected. The processor 13b then detects the state of the main lane traveling vehicle again and judges whether a meaningful reaction has been obtained from the main lane traveling vehicle. When it is judged that a meaningful reaction has been obtained from the main lane traveling vehicle, the processor 13b determines that an action corresponding to the reaction of the main lane traveling vehicle is the action of the moveable body 1. For example, when it is judged that the driver of the main lane traveling vehicle intends to encourage the moveable body 1 to merge into the main lane, the processor 13b starts to merge the moveable body 1 into the main lane. When it is judged that the driver of the main lane traveling vehicle intends to continue traveling and is not encouraging the moveable body 1 to merge into the main lane, for example, the processor 13b attempts merging into the main lane again after the main lane traveling vehicle passes by.

When it is judged that a meaningful reaction has not been obtained from the main lane traveling vehicle, the processor 13b determines the action of the moveable body 1 to be an action for encouraging a reaction, from the oncoming vehicle, that would allow the intention of the driver of the main lane traveling vehicle to be detected. The processor 13b thus detects the state of another moveable body 4 traveling behind the moveable body 1 in a second lane when the moveable body 1 is to merge from a first lane to the second lane. The processor 13b then performs action determination processing when the detected state of the other moveable body 4 is that the other moveable body 4 is traveling at constant speed.

When the main lane traveling vehicle is traveling at constant speed during merging of the moveable body 1 from the driving lane to the main lane, the intention of the main lane traveling vehicle is not necessarily clear, and a standstill may occur between the moveable body 1 and the main lane traveling vehicle. Accordingly, the action determination processing determines the action of the moveable body 1 to be an action encouraging a reaction from the oncoming vehicle in order to detect the intention of the driver of the oncoming vehicle more accurately. This approach can reduce the probability of a standstill.

Next, an example of operations when the moveable body 1 is turning right or left at an intersection or a T junction, i.e. when the moveable body 1 proceeds from a traveling road of the moveable body 1 onto a crossroad that intersects with the traveling road, is described with reference to Table 3.

**[Table 3]**

| State of other moveable body | Action of moveable body | State of other moveable body | Action of moveable body |
|---|---|---|---|
| Crossroad traveling vehicle is stopped | Move slightly forward | No change in crossroad traveling vehicle | Proceed onto crossroad |
| | | Crossroad traveling vehicle is moving forward | Encourage crossroad traveling vehicle to move forward |
| Crossroad traveling vehicle is traveling | Move slightly forward | Crossroad traveling vehicle is stopped | Proceed onto crossroad |
| | | Crossroad traveling vehicle is decelerating and flashing headlights | |
| | | Crossroad traveling vehicle decelerated but is not flashing headlights, or crossroad traveling vehicle is traveling without changing speed | Encourage crossroad traveling vehicle to move forward |

When the moveable body 1 is turning right or left at an intersection or a T junction, the processor 13b detects the state of another moveable body 4 by detecting the state of a vehicle, among vehicles traveling on the crossroad, ahead of which the moveable body 1 is attempting to proceed. The vehicle, traveling on the crossroad, ahead of which the moveable body 1 is attempting to proceed is referred to below as a crossroad traveling vehicle.

The processor 13b determines that "move slightly forward" is the action of the moveable body 1 when the crossroad traveling vehicle is stopped. The processor 13b then detects the state of the crossroad traveling vehicle again. When the state of the crossroad traveling vehicle has not changed for a predetermined time or longer, i.e. when the crossroad traveling vehicle remains stopped, the processor 13b causes the moveable body 1 to proceed ahead of the crossroad traveling vehicle. When the crossroad traveling vehicle is moving forward, the processor 13b determines that the action of the moveable body 1 is not to proceed ahead of the crossroad traveling vehicle but rather to perform an action encouraging the crossroad traveling vehicle to move forward.

When the crossroad traveling vehicle is traveling, but a space of a predetermined size or greater allowing the moveable body 1 to proceed exists ahead of the crossroad traveling vehicle, the processor 13b determines that "move slightly forward" is the action of the moveable body 1. The processor 13b then detects the state of the crossroad traveling vehicle again. When the crossroad traveling vehicle is stopped, and when the crossroad traveling vehicle is decelerating and is flashing its headlights, the processor 13b judges that the driver of the crossroad traveling vehicle intends to yield the right of way to the moveable body 1 and causes the moveable body 1 to proceed to the crossroad. When the crossroad traveling vehicle decelerated but is not flashing its headlights, the processor 13b determines that the action of the moveable body 1 is not to proceed ahead of the crossroad traveling vehicle but rather to perform an action encouraging the crossroad traveling vehicle to move forward.

The processor 13b may, for example, detect the state of another moveable body 4 located in the travel direction of the moveable body 1 on the traveling road of the moveable body 1 when the moveable body 1 is traveling. In this case, the processor 13b may perform action determination processing when detecting that the other moveable body 4 is stopped. This enables the processor 13b to determine an action of the moveable body 1, such as moving forward or stopping, from the reaction of the other moveable body 4 when the moveable body 1 and the other moveable body 4 are going to pass each other on a narrow road, for example.

The processor 13b may detect a traffic mirror from the surrounding image acquired by the imaging unit 11 and detect the state of the other moveable body 4 based on the image reflected in the traffic mirror. This enables detection of the state of the other moveable body 4 at roads, intersections, and the like with poor visibility.

The image processing apparatus 10b in the present embodiment thus includes the communication interface 12 and the processor 13b. The processor 13b performs action determination processing to detect an image of another moveable body 4 from the surrounding image capturing the surroundings of the moveable body 1 and determine an action of the moveable body 1 based on the state of the detected other moveable body 4. The communication interface 12 outputs, to the moveable body 1, information with an instruction to perform the action of the moveable body 1 determined by the processor 13b. As the action determination processing, the processor 13b determines a first action of the moveable body 1 based on the first state of the other moveable body 4 detected from the surrounding image and outputs information with an instruction to perform the determined first action to the moveable body 1 via the communication interface 12. When the processor 13b does not obtain a meaningful reaction of the other moveable body 4 to the first action based on a second state of the other moveable body 4 detected from the surrounding image after the first action by the moveable body 1, the processor 13b determines the second action of the moveable body 1.

When a meaningful reaction of the other moveable body 4 to the first action of the moveable body 1 is not obtained, the moveable body 1 is caused to perform the second action to encourage a reaction from the other moveable body 4. This allows the intention of the driver of the other moveable body 4 to be detected more accurately. The probability of a standstill occurring between the moveable body 1 and the other moveable body 4 is thereby reduced, promoting smooth transportation. The convenience of transportation by the moveable body 1 can thus be improved.

### Third Embodiment

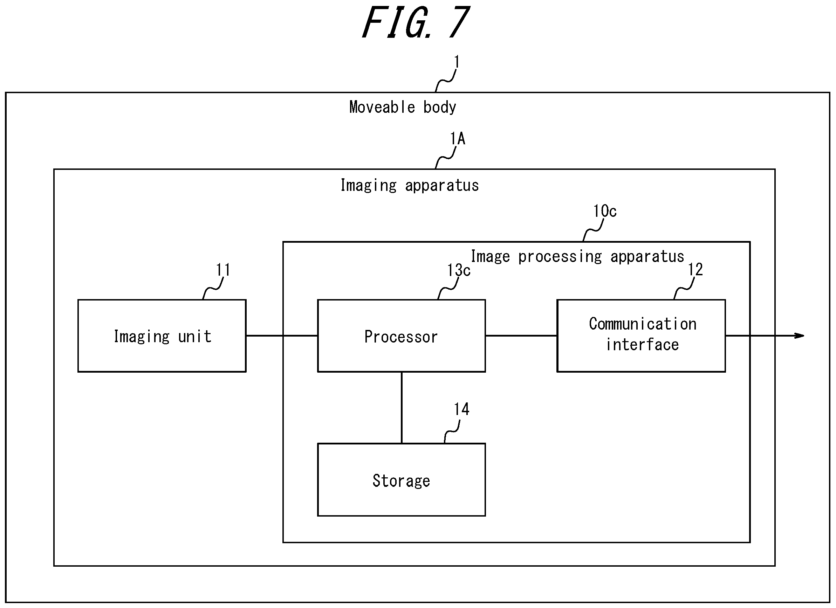

FIG. 7 illustrates an example of the main configuration of an image processing apparatus 10c according to a third embodiment of the present invention. As illustrated in FIG. 7, the image processing apparatus 10c according to the present embodiment is mounted in a moveable body 1 that transports passengers, such as a bus or a taxi. The moveable body 1 includes an automatic driving function. The image processing apparatus 10c detects the state of a candidate passenger of the moveable body 1 from a surrounding image of the surroundings of the moveable body 1 and determines an action for the moveable body 1 to execute in accordance with the detected state of the candidate passenger.

The image processing apparatus 10c illustrated in FIG. 7 includes a communication interface 12 as an output interface, a processor 13c, and a storage 14. In other words, the image processing apparatus 10c according to the present embodiment differs from the image processing apparatus 10a according to the first embodiment in that the processor 13a is changed to the processor 13c. An imaging unit 11 that acquires surrounding images by capturing images of the surroundings of the moveable body 1 is mounted in the moveable body 1 as an input interface. The image processing apparatus 10c and the imaging unit 11 form an imaging apparatus 1A mounted in the moveable body 1.

Examples of the processor 13c include a dedicated processor such as a DSP and a general-purpose processor such as a CPU. The processor 13c controls overall operations of the image processing apparatus 10c. For example, the processor 13c detects an image of a candidate passenger of the moveable body 1 from the surrounding image acquired by the imaging unit 11 and determines an action of the moveable body 1 based on the state of the detected candidate passenger. The processor 13c detects the state of the candidate passenger based on at least one of the movement direction of the candidate passenger, the direction of the face or gaze of the candidate passenger, and movement of a hand or foot of the candidate passenger.

The processor 13c also accesses various control systems of the moveable body 1 via the communication interface 12 to detect an action of the moveable body 1. As actions of the moveable body 1, the processor 13c detects move forward, move backward, stop, decelerate, change course, turn on lights, flash headlights, activate turn signal, honk horn, external display, maintain current state, and the like. For example, the processor 13c accesses the control system that controls driving of the moveable body 1 to detect actions such as move forward, move backward, stop, decelerate, and change course. The processor 13c accesses the control system that controls the headlights and turn signals, honking of the horn, and the like of the moveable body 1 to detect actions such as turn on lights, flash headlights, activate turn signal, honk horn, external display, and the like.

The processor 13c detects an image of a candidate passenger of the moveable body 1 from the surrounding image acquired by the imaging unit 11 and determines a first action of the moveable body 1 based on the state of the detected candidate passenger. The processor 13c outputs information with an instruction to take the determined first action to the control system of the moveable body 1 via the communication interface 12. The processor 13c determines a second action of the moveable body 1 based on the state of the candidate passenger detected from the surrounding image acquired by the imaging unit 11 after the first action by the moveable body 1.

Next, the operations of the image processing apparatus 10c are described.

When a fully automatic driving function is installed in the moveable body 1 that transports passengers, the moveable body 1 may recognize a person standing at a bus stop, a person standing by the side of the traveling road of the moveable body 1, or the like as a candidate passenger and stop to allow the candidate passenger to board. However, such a candidate passenger will not necessarily board the moveable body 1. In this case, the moveable body 1 might continue to recognize the person standing at a bus stop, the person standing by the side of the traveling road of the moveable body 1, or the like as a candidate passenger and remain stopped. In this way, a standstill occurs between the moveable body 1 and the candidate passenger, which may impede smooth transportation.

Under conditions in which the above-described standstill may occur, the image processing apparatus 10c of the present embodiment performs a further action with respect to the candidate passenger, after a first action by the moveable body 1, to obtain a reaction from the candidate passenger and more accurately detect the intention of the candidate passenger. In other words, the intention of the candidate passenger is detected in the present embodiment as though the moveable body 1 and the candidate passenger were having a conversation. In this way, the probability of a standstill occurring is reduced, promoting smooth transportation. The convenience of transportation by the moveable body 1 can thus be improved.

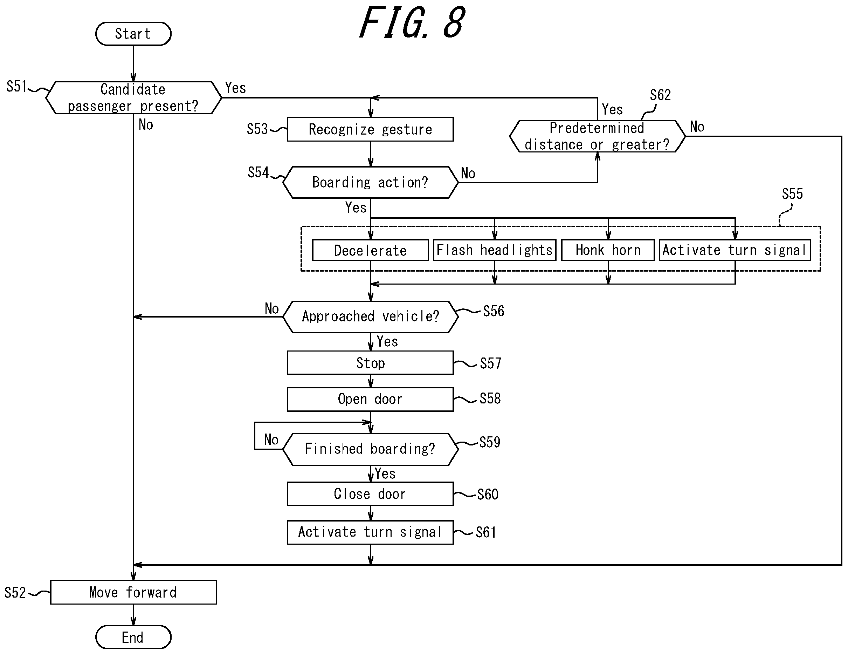

FIG. 8 is a flowchart illustrating an example of operations by the image processing apparatus 10c and illustrates an image processing method executed by the image processing apparatus 10c. In the example in FIG. 8, the moveable body 1 is assumed to be a taxi.

Step S51: the processor 13c judges whether a candidate passenger is present from the surrounding image acquired by the imaging unit 11 while the moveable body 1 is traveling. Here, the processor 13c detects a person standing by the side of the traveling road of the moveable body 1 as the candidate passenger, for example.

Step S52: when it is judged that no candidate passenger is present (step S51: No), the processor 13c causes the moveable body 1 to continue moving forward. In other words, the processor 13c causes the moveable body 1 to continue traveling.

Step S53: when it is judged that a candidate passenger is present (step S51: Yes), the processor 13c performs gesture recognition on the candidate passenger from the surrounding image acquired by the imaging unit 11.

Step S54: from the result of the gesture recognition of the candidate passenger, the processor 13c judges whether the candidate passenger performed a boarding action for boarding the taxi. Examples of the boarding action for boarding the taxi include the candidate passenger raising a hand, directing his gaze towards the moveable body 1, and the like. Despite performing such actions, however, the candidate passenger does not necessarily have the intention of boarding the moveable body 1.

Step S55: when it is judged that the candidate passenger has performed a boarding action (step S54: Yes), the processor 13c determines that "decelerate", "flash headlights", "honk horn", "activate turn signal", or the like is the first action of the moveable body 1. The processor 13c then outputs information with an instruction to take the determined action to the moveable body 1 via the communication interface 12.

Step S56: the processor 13c judges whether the candidate passenger has approached the corresponding vehicle, i.e. the moveable body 1, from the surrounding image acquired by the imaging unit 11 after the first action by the moveable body 1 as determined in step S55. When the candidate passenger that performed the boarding action has approached the moveable body 1, it is likely that the candidate passenger intends to board the moveable body 1. The judgment of whether the candidate passenger has approached the moveable body 1 after the first action thus allows more accurate detection of whether the candidate passenger intends to board the moveable body 1 than when judgment is made simply based on whether the candidate passenger is present.

When it is judged that the candidate passenger has not approached the moveable body 1 (step S56: No), the processor 13c judges that the candidate passenger does not intend to board the moveable body 1, continues to the processing of step S52, and causes the moveable body 1 to continue moving forward. When it is judged that the candidate passenger has not approached the moveable body 1, the processor 13c may return to the processing of step S55, cause the moveable body 1 to perform a different action, and again judge whether the candidate passenger has approached the moveable body 1. The processor 13c may, in this case, proceed to the processing of step S52 when judging that the candidate passenger still has not approached the moveable body 1 despite multiple repetitions of an action by the moveable body 1 and a judgment of whether the candidate passenger has approached the moveable body 1.

When the action by the moveable body 1 and the judgment of whether the candidate passenger has approached the moveable body 1 is repeated multiple times, the processor 13c may determine the action of the moveable body 1 in a predetermined order of priority from among a plurality of operations such as "move forward", "move backward", "stop", "decelerate", "change course", "turn on lights", "flash headlights", "activate turn signal", "honk horn", "external display", and "maintain current state". When the moveable body 1 includes an audio output function, the actions of the moveable body 1 may include audio output. When the moveable body 1 includes a function for projection on the ground or the like, the actions of the moveable body 1 may include projection of a predetermined image, such as a message, on the sidewalk or the like.

The processor 13c may, for example, determine the action of the moveable body 1 in accordance with a predetermined order of priority based on the surrounding environment or the like. For example, the processor 13c may reduce the priority of actions that could be noisy, such as "honk horn", and increase the priority of actions that do not produce noise, such as "turn on lights", "flash headlights", and "activate turn signal", at night. The processor 13c may also assign points to each operation in accordance with a factor such as the probability of the candidate passenger noticing the operation. In this case, when a meaningful reaction is not obtained despite presentation of an action formed by a single operation to the candidate passenger one or more times, for example, the processor 13c may determine that the action of the moveable body 1 is a combination of a plurality of operations with a higher total number of points than the points assigned to the single operation.

When it is judged that the candidate passenger has approached the moveable body 1 (step S56: Yes), the processor 13c judges that the candidate passenger intends to board the moveable body 1.

Step S57: when judging that the candidate passenger intends to board the moveable body 1, the processor 13c determines that "stop" is the action of the moveable body 1 to allow the candidate passenger to board. The processor 13c then outputs information with the instruction "stop" to the moveable body 1 via the communication interface 12.

In this way, the processor 13c determines actions such as "decelerate", "flash headlights", "honk horn", and "activate turn signal" as the first action of the moveable body 1 based on the state of the candidate passenger detected from the surrounding image, for example the state of performing a boarding action. The processor 13c then outputs information with an instruction to take the determined first action to the moveable body 1 via the communication interface 12. The processor 13c then determines a second action of the moveable body 1, namely to stop or continue traveling, based on the state of the candidate passenger detected from the surrounding image acquired by the imaging unit 11 after the first action by the moveable body 1, i.e. whether the candidate passenger has approached the moveable body 1.

Step S58: after the moveable body 1 stops, the processor 13c opens the door of the moveable body 1 so that the candidate passenger can board the moveable body 1.

Step S59: after opening the door, the processor 13c judges whether the candidate passenger has finished boarding the moveable body 1.

When it is judged that the candidate passenger has not finished boarding the moveable body 1 (step S59: No), the processor 13c repeats the processing of step S59.

Step S60: when it is judged that the candidate passenger has finished boarding the moveable body 1 (step S59: Yes), the processor 13c closes the door of the moveable body 1.

Step S61: after the door of the moveable body 1 is closed, the processor 13c activates the turn signal of the moveable body 1 to indicate departure of the moveable body 1 to those nearby. Subsequently, the processor 13c proceeds to the processing of step S52 and causes the moveable body 1 to move forward.

Step S62: when it is judged that the candidate passenger is not performing a boarding action (step S54: No), the processor 13c judges whether the distance to the candidate passenger is a predetermined distance or greater based on a surrounding image. Here, the predetermined distance is a distance over which the moveable body 1 can safely stop.

When it is judged that the distance to the candidate passenger is a predetermined distance or greater (step S62: Yes), the processor 13c returns to the processing of step S53. The candidate passenger might perform a boarding action after it is judged that the candidate passenger is not performing a boarding action to board the taxi in step S54. Therefore, when the distance between the moveable body 1 and the candidate passenger is a predetermined distance or greater, the processing of step S53 and step S54 is repeated to enable repeated confirmation of the intention of the candidate passenger to board.

When it is judged that the distance to the candidate passenger is not a predetermined distance or greater (step S62: No), the processor 13c proceeds to the processing of step S52.

The above-described operations are summarized in Table 4.

**[Table 4]**

| State of candidate passenger | Action of moveable body | State of candidate passenger | Action of moveable body |
|---|---|---|---|
| Raising hand or directing gaze towards moveable body | Decelerate | Approached moveable body | Stop, open door |
| | | Did not approach moveable body | Move forward |
| | Flash headlights | Approached moveable body | Stop, open door |
| | | Did not approach moveable body | Move forward |
| | Honk horn | Approached moveable body | Stop, open door |
| | | Did not approach moveable body | Move forward |
| | Activate turn signal | Approached moveable body | Stop, open door |
| | | Did not approach moveable body | Move forward |

As illustrated in Table 4, when the processor 13c detects that the candidate passenger at a location such as the side of the traveling road of the moveable body 1 is in a state of raising his hand, directing his gaze towards the moveable body 1, or the like, the processor 13c determines "decelerate", "flash headlights", "honk horn", or "activate turn signal" to be the action of the moveable body 1. When the processor 13c detects that the candidate passenger has approached the moveable body 1 as the state of the candidate passenger after the determined action by the moveable body 1, the processor 13c determines that "stop" and "open door" are actions of the moveable body 1 to allow the candidate passenger to board. When the processor 13c detects that the candidate passenger has not approached the moveable body 1 as the state of the candidate passenger, the processor 13c determines that "move forward" is the action of the moveable body 1. After the first action, the processor 13c may cause the moveable body 1 to stop and then judge whether the candidate passenger has approached the corresponding vehicle, i.e. the moveable body 1.

In FIG. 8, an example has been used in which "decelerate", "flash headlights", "honk horn", "activate turn signal", and the like are determined to be the first action of the moveable body 1 in step S55 when it is judged that the candidate passenger has performed a boarding action, but this example is not limiting. The processor 13c may, for example, determine in step S55 that "stop" to stop the moveable body 1 is the first action of the moveable body 1. In this case, the processor 13c proceeds to the processing of step S58 onwards when judging in step S56 that the candidate passenger has approached the moveable body 1. The processor 13c closes the door, activates the turn signal, and then causes the moveable body 1 to move forward when judging in step S56 that the candidate passenger has not approached the vehicle.

Next, an example of operations of the processor 13c when the moveable body 1 is a bus is described with reference to Table 5.

**[Table 5]**

| State of candidate passenger | Action of moveable body | State of candidate passenger | Action of moveable body |
|---|---|---|---|
| Standing at bus stop Running towards bus stop | Activate turn signal | Approached moveable body | Stop, open door |
| | | Did not approach moveable body | Move forward |
| | | Directing gaze towards moveable body | Stop, open door |
| | | Raised hand towards moveable body | Stop, open door |

The processor 13c detects that a person near a bus stop is a candidate passenger. When the processor 13c detects standing near the bus stop, running towards the bus stop, or the like as the state of the candidate passenger, the processor 13c determines that "activate turn signal", for example, is the action of the moveable body 1. The processor 13c then judges that the candidate passenger intends to board the moveable body 1 when detecting that the candidate passenger has approached the moveable body 1, directed his gaze towards the moveable body 1, raised his hand while facing the moveable body 1, or the like as the state of the candidate passenger from the surrounding image acquired by the imaging unit 11 after the moveable body 1 activates the turn signal. The processor 13c then determines that "stop" and "open door" are actions of the moveable body 1 to allow the candidate passenger to board. When the processor 13c detects that the candidate passenger has not approached the moveable body 1 as the state of the candidate passenger from the surrounding image acquired by the imaging unit 11 after the moveable body 1 activates the turn signal, the processor 13c determines that "move forward" is the action of the moveable body 1.

Even if the candidate passenger is in a state of standing near the bus stop or running towards the bus stop, the candidate passenger will not necessarily board the moveable body 1. Therefore, when the processor 13c activates the turn signal of the moveable body 1 as the first action, and the candidate passenger reacts to the first action by approaching the moveable body 1, directing his gaze towards the moveable body 1, raising his hand towards the moveable body 1, or the like, the processor 13c judges that the candidate passenger intends to board the moveable body 1.

An example of the processor 13c detecting the state of the candidate passenger and determining the action of the moveable body 1 based on the detected state of the candidate passenger has been described, but this example is not limiting. The processor 13c may detect the state of a passenger who has exited the moveable body 1 from the surrounding image acquired by the imaging unit 11 and determine the action of the moveable body 1 based on the detected state. For example, the processor 13c may cause the moveable body 1 to depart or the like after detecting that the passenger has finished exiting the moveable body 1 and moved sufficiently far away from the moveable body 1. This approach can ensure safety at the time of exiting.

The image processing apparatus 10c in the present embodiment thus includes the communication interface 12 and the processor 13c. The processor 13c detects an image of a candidate passenger of the moveable body 1 from the surrounding image capturing the surroundings of the moveable body 1 that transports passengers and determines an action of the moveable body 1 based on the state of the detected candidate passenger. The communication interface 12 outputs, to the moveable body 1, information with an instruction to perform the action of the moveable body 1 determined by the processor 13c. The processor 13c determines a first action of the moveable body 1 based on the state of the candidate passenger detected from the surrounding image and outputs information with an instruction to perform the determined first action of the moveable body 1 to the moveable body 1 via the communication interface 12. The processor 13c determines a second action of the moveable body 1 based on the state of the candidate passenger detected from the surrounding image after the first action by the moveable body 1.

Determination of the second action of the moveable body 1 based on the state of the candidate passenger after the first action by the moveable body 1 enables more accurate detection of whether the candidate passenger intends to board the moveable body 1. The probability of a standstill occurring between the moveable body 1 and the candidate passenger is thereby reduced, promoting smooth transportation. The convenience of transportation by the moveable body 1 can thus be improved.

Although embodiments of the present invention have been explained using the accompanying drawings and examples, it is to be noted that various changes and modifications will be apparent to those of ordinary skill in the art within the scope of the present invention as defined by the claims.

### REFERENCE SIGNS LIST

1 Moveable body
1A Imaging apparatus
2 Crosswalk
3 Pedestrian
4 Other moveable body
10a, 10b, 10c Image processing apparatus
11 Imaging unit (input interface)
12 Communication interface (output interface)
13a, 13b, 13c Processor
14 Storage

## Claims

1. An image processing apparatus (10) comprising:
a processor (13) configured to detect an image of an object (3, 4) from a surrounding image capturing surroundings of a moveable body (1) and determine an action of the moveable body (1) based on a state of the object (3, 4); and
an output interface (12) configured to output, to the moveable body (1), information with an instruction to perform the action of the moveable body (1) determined by the processor (13);
wherein the processor (13) is configured to determine a first action of the moveable body (1) based on the state of the object (3, 4) detected from the surrounding image, and output information with an instruction to perform the first action to the moveable body (1) via the output interface (12),
wherein the processor (13) is configured to, when a reaction for which an intention of the object (3, 4) is recognizable to the first action is not obtained based on the state of the object (3, 4) detected from the surrounding image after the first action by the moveable body (1), determine a second action of the moveable body (1), enabling the moveable body (1) to encourage the object (3, 4) to react,
**characterized in that** the first action and the second action are different actions, determined in accordance with a predetermined order of priority.

2. The image processing apparatus (10a, 10c) of claim **1,**
wherein the object (3) is a person (3); and
the processor (13a, 13c) is configured to detect a state of the person (3) based on at least one of a movement direction of the person (3), a direction of a face or gaze of the person (3), and movement of a hand or foot of the person (3).

3. The image processing apparatus (10) of claim 1 or 2, wherein the processor (13) is configured to determine the first action and the second action to be at least one of move forward, move backward, stop, decelerate, change course, turn on lights, flash headlights, activate turn signal, honk horn, external display, maintain current state, output audio, and project a predetermined image.

4. An image processing apparatus (10b) according to claim 1 or claim 3 when referring to claim 1, wherein
the object (4) is another moveable body (4),
wherein the processor (13b) is configured to perform action determination processing by determining the first action of the moveable body (1) based on a first state of the another moveable body (4) detected from the surrounding image, and outputting information with the instruction to perform the first action to the moveable body (1) via the output interface (12), wherein, when a reaction for which an intention of a driver of the another moveable body (4) is recognizable to the first action is not obtained based on a second state of the another moveable body (4) detected from the surrounding image after the first action by the moveable body (1), the processor (13b) determines the second action of the moveable body (1), enabling the moveable body (1) to encourage the another moveable body (4) to react.

5. The image processing apparatus (10b) of claim 4,
wherein the processor (13b) is configured to detect at least one of move forward, move backward, stop, decelerate, steering direction, change course, turn on lights, flash headlights, activate turn signal, honk horn, external display, and maintain current state by the another moveable body (4) as the first state and the second state.

6. The image processing apparatus (10b) of claim 4 or 5, wherein the processor (13b) is configured to predict a path of the moveable body (1) and a path of the another moveable body (4) based on the first state: and when a collision between the moveable body (1) and the another moveable body (4) is predicted, the processor (13b) is configured to
determine another second action to be stop or decelerate until prediction of the collision is resolved when the second state is move forward or maintain current state, and
determine the other second action to be move forward or flash headlights when the second state is any of stop, decelerate, or change course.

7. An image processing apparatus (10c) according to any one of claims 1 to 3,
wherein the object (3) is a candidate passenger of the moveable body (1), which transports passengers.

8. An imaging apparatus (1A) comprising:
the image processing apparatus (10) of any one of claims 1 to 7; and
an input interface (11) configured to acquire the surrounding image.

9. A moveable body (1) comprising the imaging apparatus (1A) of claim 8.

10. An image processing method to be executed by an image processing apparatus (10), the method comprising:
detecting an image of an object (3, 4) from a surrounding image capturing surroundings of a moveable body (1);
determining a first action of the moveable body (1) based on a state of the object (3, 4);
outputting information with an instruction to perform the first action to the moveable body (1); and
wherein, when a reaction for which an intention of the object (3, 4) is recognizable to the first action is not obtained based on the state of the object (3, 4) detected from the surrounding image after the first action by the moveable body (1), determining a second action of the moveable body (1), enabling the moveable body (1) to encourage the object (3, 4) to react,
**characterized in that** the first action and the second action are different actions, determined in accordance with a predetermined order of priority.

11. An image processing method according to claim 10,
wherein the object (4) is another moveable body (4);
determining the first action of the moveable body (1) based on a first state of the another moveable body (4)
outputting information with the instruction to perform the first action to the moveable body (1); and
wherein, when a reaction for which an intention of a driver of the another moveable body (4) is recognizable to the first action is not obtained based on a second state of the another moveable body (4) detected from the surrounding image after the first action by the moveable body (1), determining the second action of the moveable body (1), enabling the moveable body (1) to encourage the another moveable body (4) to react.

12. An image processing method according to claim 10,
wherein the object (3) is a candidate passenger of the moveable body (1), which transports passengers.

## Patentansprüche

1. Bildverarbeitungsvorrichtung (10), aufweisend:
einen Prozessor (13), der konfiguriert ist, um ein Bild eines Objekts (3, 4) aus einem Umgebungsbild zu detektieren, das eine Umgebung eines bewegbaren Körpers (1) erfasst, und um eine Aktion des bewegbaren Körpers (1) basierend auf einem Zustand des Objekts (3, 4) zu ermitteln, und
eine Ausgabeschnittstelle (12), die konfiguriert ist, um an den bewegbaren Körper (1) eine Information mit einer Anweisung auszugeben, die durch den Prozessor (13) ermittelte Aktion des bewegbaren Körpers (1) auszuführen,
wobei der Prozessor (13) konfiguriert ist, um eine erste Aktion des bewegbaren Körpers (1) basierend auf dem Zustand des Objekts (3, 4), detektiert aus dem Umgebungsbild, zu ermitteln und eine Information mit einer Anweisung, die erste Aktion auszuführen, über die Ausgabeschnittstelle (12) an den bewegbaren Körper (1) auszugeben,
wobei der Prozessor (13) konfiguriert ist, um, wenn eine Reaktion auf die erste Aktion, für die eine Absicht des Objekts (3, 4) erkennbar ist, basierend auf dem Zustand des Objekts (3, 4), detektiert aus dem Umgebungsbild nach der ersten Aktion durch den bewegbaren Körper (1), nicht erhalten wird, eine zweite Aktion des bewegbaren Körpers (1) zu ermitteln, die es dem bewegbaren Körper (1) ermöglicht, das Objekt (3, 4) zu einer Reaktion anzuregen,
**dadurch gekennzeichnet, dass** die erste Aktion und die zweite Aktion unterschiedliche Aktionen sind, die gemäß einer vorbestimmten Prioritätenreihenfolge ermittelt werden.

2. Bildverarbeitungsvorrichtung (10a, 10c) gemäß Anspruch 1,
wobei das Objekt (3) eine Person (3) ist und
der Prozessor (13a, 13c) konfiguriert ist, um einen Zustand der Person (3) basierend auf mindestens einem von einer Bewegungsrichtung der Person (3), einer Richtung eines Gesichts oder eines Blickes der Person (3) und einer Bewegung einer Hand oder eines Fußes der Person (3) zu detektieren.

3. Bildverarbeitungsvorrichtung (10) gemäß Anspruch 1 oder 2, wobei der Prozessor (13) konfiguriert ist, um die erste Aktion und die zweite Aktion als mindestens eines von einem Vorwärtsbewegen, Rückwärtsbewegen, Anhalten, Abbremsen, Kursändern, Lichteinschalten, Aufblenden der Scheinwerfer, Aktivieren eines Blinkers, Betätigen der Hupe, einem externem Anzeigen, Beibehalten des aktuellen Zustands, Ausgeben eines Tons und einem Projizieren eines vorbestimmten Bildes zu ermitteln.

4. Bildverarbeitungsvorrichtung (10b) gemäß Anspruch 1 oder Anspruch 3 mit Bezug auf Anspruch 1, wobei
das Objekt (4) ein anderer bewegbarer Körper (4) ist,
wobei der Prozessor (13b) konfiguriert ist, um eine Aktionsermittlungsverarbeitung durchzuführen, durch Ermitteln der ersten Aktion des bewegbaren Körpers (1) basierend auf einem ersten Zustand des anderen bewegbaren Körpers (4), der aus dem Umgebungsbild detektiert wird, und Ausgeben einer Information mit der Anweisung, die erste Aktion auszuführen, an den bewegbaren Körper (1) über die Ausgabeschnittstelle (12), wobei, wenn eine Reaktion auf die erste Aktion, für die eine Absicht eines Fahrers des anderen bewegbaren Körpers (4) erkennbar ist, basierend auf einem zweiten Zustand des anderen bewegbaren Körpers (4), der nach der ersten Aktion durch den bewegbaren Körper (1) aus dem Umgebungsbild detektiert wird, nicht erhalten wird, der Prozessor (13b) die zweite Aktion des bewegbaren Körpers (1) ermittelt, die es dem bewegbaren Körper (1) ermöglicht, den anderen bewegbaren Körper (4) zu einer Reaktion anzuregen.

5. Bildverarbeitungsvorrichtung (10b) gemäß Anspruch 4,
wobei der Prozessor (13b) konfiguriert ist, um mindestens eines von einem Vorwärtsbewegen, Rückwärtsbewegen, Anhalten, Abbremsen, Lenkrichtung, Kursändern, Lichteinschalten, Aufblenden der Scheinwerfer, Aktivieren des Blinkers, Betätigen der Hupe, einem externen Anzeigen und einem Beibehalten des aktuellen Zustands durch den anderen bewegbaren Körper (4) als den ersten Zustand und den zweiten Zustand zu detektieren.

6. Bildverarbeitungsvorrichtung (10b) gemäß Anspruch 4 oder 5, wobei der Prozessor (13b) konfiguriert ist, um einen Pfad des bewegbaren Körpers (1) und einen Pfad des anderen bewegbaren Körpers (4) basierend auf dem ersten Zustand vorherzusagen, und wenn eine Kollision zwischen dem bewegbaren Körper (1) und dem anderen bewegbaren Körper (4) vorhergesagt wird, der Prozessor (13b) konfiguriert ist, um
eine andere zweite Aktion als Anhalten oder Abbremsen zu ermitteln, bis die Vorhersage der Kollision aufgelöst ist, wenn der zweite Zustand ein Vorwärtsbewegen oder Beibehalten des aktuellen Zustands ist, und
die andere zweite Aktion als Vorwärtsbewegen oder Aufblenden der Scheinwerfer zu ermitteln, wenn der zweite Zustand irgendeines von einem Anhalten, Abbremsen oder Kursändern ist.

7. Bildverarbeitungsvorrichtung (10c) gemäß irgendeinem der Ansprüche 1 bis 3,
wobei das Objekt (3) ein Fahrgastkandidat des bewegbaren Körpers (1) ist, der Fahrgäste transportiert.

8. Abbildungsvorrichtung (1A), aufweisend:
die Bildverarbeitungsvorrichtung (10) gemäß irgendeinem der Ansprüche 1 bis 7 und
eine Eingabeschnittstelle (11), die konfiguriert ist, um das Umgebungsbild zu erlangen.

9. Bewegbarer Körper (1), aufweisend die Abbildungsvorrichtung (1A) gemäß Anspruch 8.

10. Bildverarbeitungsverfahren zum Ausführen durch eine Bildverarbeitungsvorrichtung (10), wobei das Verfahren aufweist:
Detektieren eines Bildes eines Objekts (3, 4) aus einem Umgebungsbild, das eine Umgebung eines bewegbaren Körpers (1) erfasst,
Ermitteln einer ersten Aktion des bewegbaren Körpers (1) basierend auf einem Zustand des Objekts (3, 4),
Ausgeben einer Information mit einer Anweisung zum Ausführen der ersten Aktion an den bewegbaren Körper (1), und
wobei, wenn eine Reaktion auf die erste Aktion, für die eine Absicht des Objekts (3, 4) erkennbar ist, basierend auf dem Zustand des Objekts (3, 4), detektiert aus dem Umgebungsbild nach der ersten Aktion durch den bewegbaren Körper (1), nicht erhalten wird, eine zweite Aktion des bewegbaren Körpers (1) ermittelt wird, die es dem bewegbaren Körper (1) ermöglicht, das Objekts (3, 4) zu einer Reaktion zu veranlassen,
**dadurch gekennzeichnet, dass** die erste Aktion und die zweite Aktion unterschiedliche Aktionen sind, die gemäß einer vorgegebenen Prioritätenreihenfolge ermittelt werden.

11. Bildverarbeitungsverfahren gemäß Anspruch 10,
wobei das Objekt (4) ein anderer bewegbarer Körper (4) ist,
Ermitteln der ersten Aktion des bewegbaren Körpers (1) basierend auf einem ersten Zustand des anderen bewegbaren Körpers (4),
Ausgeben einer Information mit der Anweisung an den bewegbaren Körper (1), die erste Aktion auszuführen, und
wobei, wenn eine Reaktion auf die erste Aktion, für die eine Absicht eines Fahrers des anderen bewegbaren Körpers (4) erkennbar ist, basierend auf einem zweiten Zustand des anderen bewegbaren Körpers (4), detektiert aus dem Umgebungsbild nach der ersten Aktion durch den bewegbaren Körper (1), nicht erhalten wird, die zweite Aktion des bewegbaren Körpers (1) ermittelt wird, die es dem bewegbaren Körper (1) ermöglicht, den anderen bewegbaren Körper (4) zu einer Reaktion anzuregen.

12. Bildverarbeitungsverfahren gemäß Anspruch 10,
wobei das Objekt (3) ein Fahrgastkandidat des bewegbaren Körpers (1) ist, der Fahrgäste transportiert.

## Revendications

1. Appareil de traitement d'image (10), comprenant :
un processeur (13) configuré pour détecter une image d'un objet (3, 4) à partir d'une image d'environnement capturant un environnement d'un corps mobile (1) et déterminer une action du corps mobile (1) sur la base d'un état de l'objet (3, 4) ; et
une interface de sortie (12) configurée pour émettre au corps mobile (1) une information avec une instruction pour exécuter l'action du corps mobile (1) déterminée par le processeur (13) ;
dans lequel le processeur (13) est configuré pour déterminer une première action du corps mobile (1) en fonction de l'état de l'objet (3, 4) détecté à partir de l'image d'environnement, et pour émettre une information avec une instruction d'exécution de la première action au corps mobile (1) via l'interface de sortie (12),
dans lequel le processeur (13) est configuré pour, lorsqu'une réaction à la première action, pour laquelle une intention de l'objet (3, 4) est reconnaissable, n'est pas obtenue sur la base de l'état de l'objet (3, 4) détecté à partir de l'image d'environnement après la première action par le corps mobile (1), déterminer une deuxième action du corps mobile (1), permettant au corps mobile (1) d'encourager l'objet (3, 4) à réagir,
**caractérisé en ce que** la première action et la deuxième action sont des actions différentes, déterminées selon un ordre de priorité prédéterminé.

2. Appareil de traitement d'image (10a, 10c) selon la revendication 1,
dans lequel l'objet (3) est une personne (3) ; et
le processeur (13a, 13c) est configuré pour détecter un état de la personne (3) sur la base d'au moins l'un parmi une direction de mouvement de la personne (3), une direction d'un visage ou d'un regard de la personne (3), et un mouvement d'une main ou d'un pied de la personne (3).

3. Appareil de traitement d'image (10) selon la revendication 1 ou 2, dans lequel le processeur (13) est configuré pour déterminer la première action et la deuxième action comme étant au moins l'une parmi : avancer, reculer, s'arrêter, ralentir, changer de direction, allumer les feux, faire clignoter les phares, activer le clignotant, klaxonner, affichage externe, maintenir l'état actuel, émettre un son et projeter une image prédéterminée.

4. Appareil de traitement d'image (10b) selon la revendication 1 ou la revendication 3 en se référant à la revendication 1, dans lequel
l'objet (4) est un autre corps mobile (4),
dans lequel le processeur (13b) est configuré pour effectuer un traitement de détermination d'action en déterminant la première action du corps mobile (1) sur la base d'un premier état de l'autre corps mobile (4) détecté à partir de l'image d'environnement, et en émettant une information avec l'instruction d'effectuer la première action au corps mobile (1) via l'interface de sortie (12), dans lequel, lorsqu'une réaction à la première action pour laquelle une intention d'un conducteur de l'autre corps mobile (4) est reconnaissable n'est pas obtenue sur la base d'un deuxième état de l'autre corps mobile (4) détecté à partir de l'image d'environnement après la première action par le corps mobile (1), le processeur (13b) détermine la deuxième action du corps mobile (1), permettant au corps mobile (1) d'encourager l'autre corps mobile (4) à réagir.

5. Appareil de traitement d'image (10b) selon la revendication 4,
dans lequel le processeur (13b) est configuré pour détecter au moins l'un parmi : avancer, reculer, s'arrêter, ralentir, direction de conduite, changer de direction, allumer les feux, faire clignoter les phares, activer le clignotant, klaxonner, affichage externe, et maintenir l'état actuel par l'autre corps mobile (4) comme premier état et deuxième état.

6. Appareil de traitement d'image (10b) selon la revendication 4 ou 5, dans lequel le processeur (13b) est configuré pour prédire une trajectoire du corps mobile (1) et une trajectoire de l'autre corps mobile (4) sur la base du premier état, et lorsqu'une collision entre le corps mobile (1) et l'autre corps mobile (4) est prédite, le processeur (13b) est configuré pour
déterminer une autre deuxième action comme étant s'arrêter ou ralentir jusqu'à ce que la prédiction de la collision soit résolue lorsque le deuxième état est avancer ou maintenir l'état actuel, et
déterminer l'autre deuxième action comme étant avancer ou faire clignoter les phares lorsque le deuxième état est l'un quelconque parmi s'arrêter, ralentir ou changer de direction.

7. Appareil de traitement d'image (10c) selon l'une quelconque des revendications 1 à 3,
dans lequel l'objet (3) est un passager candidat du corps mobile (1) qui transporte des passagers.

8. Appareil d'imagerie (1A), comprenant :
l'appareil de traitement d'image (10) selon l'une quelconque des revendications 1 à 7 ; et
une interface d'entrée (11) configurée pour acquérir l'image d'environnement.

9. Corps mobile (1) comprenant l'appareil d'imagerie (1A) selon la revendication 8.

10. Procédé de traitement d'image à exécuter par un appareil de traitement d'image (10), le procédé comprenant :
la détection d'une image d'un objet (3, 4) à partir d'une image d'environnement capturant un environnement d'un corps mobile (1) ;
la détermination d'une première action du corps mobile (1) sur la base d'un état de l'objet (3, 4) ;
l'émission d'une information avec une instruction d'exécution de la première action au corps mobile (1) ; et
dans lequel, lorsqu'une réaction à la première action pour laquelle une intention de l'objet (3, 4) est reconnaissable n'est pas obtenue sur la base de l'état de l'objet (3, 4) détecté à partir de l'image d'environnement après la première action par le corps mobile (1), une deuxième action du corps mobile (1) est déterminée, permettant au corps mobile (1) d'encourager l'objet (3, 4) à réagir,
**caractérisé en ce que** la première action et la deuxième action sont des actions différentes, déterminées selon un ordre de priorité prédéterminé.

11. Procédé de traitement d'image selon la revendication 10,
dans lequel l'objet (4) est un autre corps mobile (4) ;
déterminer la première action du corps mobile (1) sur la base d'un premier état de l'autre corps mobile (4)
émettre une information avec l'instruction d'exécuter la première action au corps mobile (1) ; et
dans lequel, lorsqu'une réaction à la première action pour laquelle une intention d'un conducteur de l'autre corps mobile (4) est reconnaissable n'est pas obtenue sur la base d'un deuxième état de l'autre corps mobile (4) détecté à partir de l'image d'environnement après la première action par le corps mobile (1), la deuxième action du corps mobile (1) est déterminée, permettant au corps mobile (1) d'encourager l'autre corps mobile (4) à réagir.

12. Procédé de traitement d'image selon la revendication 10,
dans lequel l'objet (3) est un passager candidat du corps mobile (1) qui transporte des passagers.
